Europäisches Patentamt

European Patent Office

Office européen des brevets

(11) Veröffentlichungsnummer: **0 154 034**
**B1**

# (12) EUROPÄISCHE PATENTSCHRIFT

(45) Veröffentlichungstag der Patentschrift:
22.03.89

(51) Int. Cl.⁴: **F 02 D 41/26, G 05 B 19/04**

(21) Anmeldenummer: 84116227.4

(22) Anmeldetag: **22.12.84**

(54) Elektronisches Steuersystem zur Steuerung von Maschinen.

(30) Priorität: 03.03.84 DE 3407920

(43) Veröffentlichungstag der Anmeldung:
11.09.85 Patentblatt 85/37

(45) Bekanntmachung des Hinweises auf die Patenterteilung:
22.03.89 Patentblatt 89/12

(84) Benannte Vertragsstaaten:
DE FR GB IT SE

(56) Entgegenhaltungen:
DE-A- 2 732 471
GB-A- 2 007 392
US-A- 4 366 541
US-A- 4 475 493

IBM TECHNICAL DISCLOSURE BULLETIN, Band 24, Nr. 1B, Juni 1981, Seiten 795-797, New York, US; R.L. COOK et al.: "Relative addressing of data sets"
WESCON TECHNICAL PAPER, Band 26, September 1982, Seiten 32/1.1-4, North Hollywood, US; M. MILLIER: "Table-driven approach to information storage and retrieval"
SAE-pape 830422

(73) Patentinhaber: ROBERT BOSCH GMBH, Postfach 50, D-7000 Stuttgart 1 (DE)

(72) Erfinder: Böhmler, Heinz, Bachgartenstrasse 49, D-7127 Pleidelsheim (DE)
Erfinder: Däumer, Rolf, Ing. grad., Bleichstrasse 18, D-7252 Well der Stadt 2 (DE)

## Beschreibung

### Stand der Technik

Die Erfindung geht aus von einem Steuersystem nach der Gattung des Hauptanspruchs. Für Verbrennungsmotoren ist bereits ein elektronisches Steuersystem zur Steuerung des Zündzeitpunktes bekannt, bei dem ein zentraler Mikroprozessor den Zündzeitpunkt in Abhängigkeit von aktuellen Betriebsbedingungen steuert. In der DE-OS 2 732 471 wird ein solches Steuersystem beschrieben, bei dem der Mikroprozessor mit einem programmierbaren Festwertspeicher zusammenarbeitet. In diesen Festwertspeicher werden Daten einprogrammiert, die speziell das jeweils zu steuernde Motormodell repräsentieren. Sind die Daten erst einmal in den Festwertspeicher eingegeben, so ist das elektronische Steuersystem speziell auf einen bestimmten Motor ausgerichtet. Eine Anpassung an geänderte Betriebsbedingungen, die beispielsweise eine andere Verknüpfung der Motordaten erfordern, ist bei diesem bekannten Steuersystem auf einfache Weise nicht möglich. Hierzu muss mit einem verhältnismässig hohen Arbeitsaufwand der gesamte Festwertspeicher neu programmiert werden.

Das Wescon Technical Paper, Band 26, Sept 82, S. 32/1.1–4 beschreibt einen Datenzugriff über einen Daten-Dictionary, in dem über ein Inhaltsverzeichnis zu Daten, g.g.f. Vektoren zugegriffen wird. Dieser Zugriff findet bei höheren Programmiersprachen wie PASCAL Verwendung und ermöglicht nicht bei mehreren Zugriffen auf das Dictionary eine spätere Aufteilung der Zugriffe.

### Vorteile der Erfindung

Das erfindungsgemässe Steuersystem mit den kennzeichnenden Merkmalen des Hauptanspruchs hat demgegenüber den Vorteil, dass in vielen Fällen eine Anpassung an geänderte Betriebsbedingungen dadurch erreicht werden kann, dass lediglich einige wenige Adressen oder Daten im externen Speicher geändert werden. Eine vollständige Umprogrammierung des gesamten Speicherinhaltes ist in den meisten Fällen nicht erforderlich. Soll beispielsweise eine vorgegebene Verknüpfungsart – z.B. Addition – mit einer anderen Datengruppe durchgeführt werden, so genügt es, wenn im Adressenfeld oder im Vektorenfeld die entsprechenden Datenadressen (Zieladressen) geändert werden. Bei dem oben beschriebenen bekannten Steuersystem müsste dagegen in diesem Fall eine Änderung des Basisprogrammes, welches im Mikroprozessor abgespeichert ist, vorgenommen werden. Der Programmspeicher des Mikroprozessors müsste hierzu vom Hersteller des Speicherelementes umprogrammiert werden. Eine kostengünstige Massenherstellung, die bei dem Mikroprozessor des erfindungsgemässen Steuersystems möglich ist, kann wegen der oftmals erforderlichen Änderungen bei dem bekannten Steuersystem nicht erfolgen.

Durch die in den Unteransprüchen aufgeführten Massnahmen sind vorteilhafte Weiterbildungen und Verbesserungen des im Hauptanspruch angegebenen Steuersystems möglich. Es ist vorteilhaft, das im externen Speicher enthaltene Datenfeld in ein Konstantenfeld zur Aufnahme kundenspezifischer Konstanten und in ein Kennlinienfeld zur Aufnahme von Kennlinien – Stützwerten zu unterteilen. Der Zugriff zu den im Konstantenfeld abgelegten Daten kann dadurch erfolgen, dass der Mikroprozessor die entsprechende Datenadresse direkt ansteuert oder diese Datenadresse aus dem Adressenfeld entnimmt. Gleichermassen kann auch eine Datenadresse des Kennlinienfeldes vom Mikroprozessor abgefragt werden. In der bevorzugten Ausführungsform wird jedoch vorgesehen, dass ein im externen Speicher zusätzlich enthaltenes Vektorenfeld zunächst indirekt über das Adressenfeld adressiert wird. Die in den einzelnen Adressen des Vektorenfeldes abgelegten Adressen, die auch als Vektoren bezeichnet werden könnten, weisen dann auf die einzelnen Datenadressen des Kennlinienfeldes hin. Auf diese Weise kann eine Verknüpfung bestimmter Daten des Kennlinienfeldes durch eine entsprechende Abspeicherung der zugehörigen Datenadressen im Vektorenfeld erreicht werden. Soll nun eine derartige Verknüpfung mit einer anderen Datengruppe des Kennlinienfeldes vollzogen werden, so braucht lediglich im Adressenfeld eine andere Vektoradresse abgelegt zu werden, mit der über das Vektorenfeld der Zugriff zu der gewünschten Datengruppe im Kennlinienfeld erfolgen kann. Eine Änderung des Programmes im Mikroprozessor ist hierzu nicht erforderlich.

Das im Mikroprozessor enthaltene Basisprogramm greift zunächst zu den Anfangsadressen des Adressenfeldes zu. Zunächst werden die dort abgelegten Speicherinhalte zum Mikroprozessor übertragen, der dann entsprechend dem Inhalt der jeweiligen Anfangsadresse eine Adresse des Daten- oder Vektorfeldes abfragt, wobei der Inhalt einer Vektoradresse auf eine Datenadresse des Datenfeldes hinweist. Erst dann erfolgt der Zugriff des Mikroprozessors zu den gewünschten Datenadressen und den dort abgelegten Daten. So kann beispielsweise über die in dem Vektorfeld abgelegten Datenadressen eine Adressierung der Kennlinien-Daten des Kennlinienfeldes erfolgen. Bei diesen Kennliniendaten kann es sich beispielsweise um mehrere Stützwerte einer Kennlinie handeln, wobei zwischen den Stützwerten eine Interpolation durch den Mikroprozessor erfolgen kann. Die rechnerische Verknüpfung unterschiedlicher Kennlinien lässt sich auf einfache Weise durch geeignete Adressierung im Adressenfeld erreichen. Dabei genügt es den Inhalt einer Adresse des Adressenfeldes zu ändern, um auf andere Kennlinienwerte über das Vektorenfeld zugreifen zu können.

Selbstverständlich können zur Sicherheit, um nachträglich eine Erweiterung der kundenspezifischen Motordaten vornehmen zu können, zunächst einige Speicherplätze im externen Speicher frei bleiben. Durch die erfindungsgemässe Aufteilung des externen Speichers in ein Adressfeld, ein Vektorenfeld und ein Datenfeld genügt es, eine verhältnismässig geringe Anzahl von freien Speicherplätzen vorzusehen, da eine Vielzahl von Änderungen zur Anpassung an geänderte, kundenspezifische Vorgaben bereits ohne zusätzliche Speicherplätze realisierbar ist.

Zeichnung

Ein Ausführungsbeispiel der Erfindung ist in der Zeichnung dargestellt und in der nachfolgenden Beschreibung näher erläutert. Es zeigen:

Figur 1 ein Blockschaltbild des elektronischen Steuersystems und
Figur 2 die Aufteilung des in Figur 1 dargestellten externen Speichers.

Beschreibung des Ausführungsbeispieles

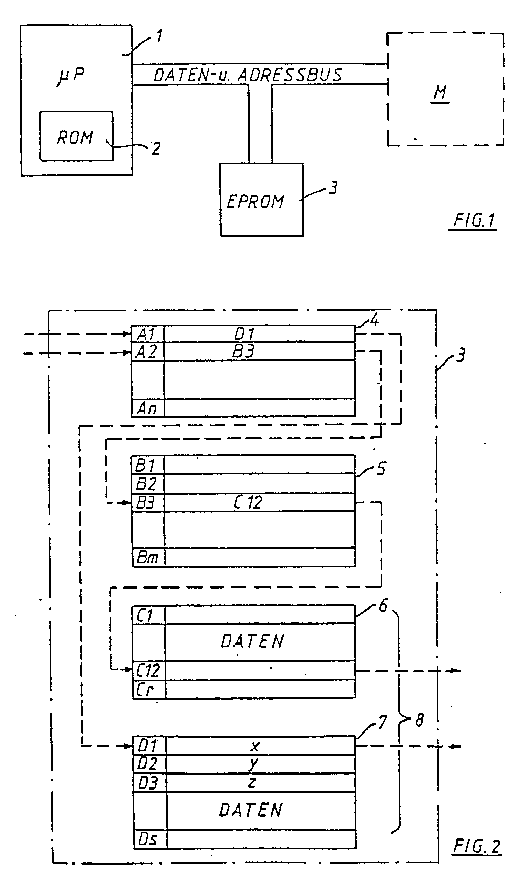

Das in Figur 1 dargestellte, vereinfachte Blockschaltbild zeigt einen Mikroprozessor 1 mit einem internen Speicher 2, der über einen Daten- und Adressbus mit einem externen Speicher 3 und einem zu steuernden Verbrennungsmotor M in Verbindung steht. Der interne Speicher 2 kann als ROM (reiner Lesespeicher) und der externe Speicher 3 als EPROM (löschbarer, programmierbarer Speicher) ausgeführt sein.

Das für die Steuerung des Verbrennungsmotors M vorgesehene Programm und die zugehörigen Daten sind getrennt voneinander gespeichert und zwar so, dass allgemeine Programmteile im internen Speicher 2 und kundenspezifische Funktionen und motorabhängige Daten im externen Speicher 3 abgelegt sind. Der interne Speicher 2 und der externe Speicher 3 können jeweils aus einem Speicherchip bestehen.

Der externe Speicher 3 ist in mehrere Adressen – und Datenfelder unterteilt. Diese Unterteilung kann wie in Figur 2 angegeben vorgenommen sein.

Der externe Speicher 3 ist im dargestellten Ausführungsbeispiel in ein Adressenfeld 4, ein Vektorenfeld 5, ein Kennlinienfeld 6 und ein Konstantenfeld 7 unterteilt. Das Kennlinienfeld 6 und das Konstantenfeld 7 bilden gemeinsam das Datenfeld 8.

Alle motorspezifischen Konstanten sind im Konstantenfeld 7 unter festen Datenadressen D1-Ds abgelegt. Im Kennlinienfeld 6 sind Kennlinienstützwerte, die charakteristische Werte von Kennlinien darstellen, unter Datenadressen C1-Cr gespeichert.

Im Adressenfeld 4 sind unter Anfangsadressen A1-An Vektoradressen B1-Bm oder Datenadressen C1-Cr, D1-Ds abgelegt. Die Vektoradressen B1-Bm weisen auf Speicherplätze des Vektorenfeldes 5 hin, wo insbesondere Datenadressen C1-Cr des Kennlinienfeldes 6 gespeichert sind.

Die Reihenfolge der zu bearbeitenden Kennlinien, die durch mehrere Kennlinienstützwerte repräsentiert werden, wird mittels der im Adressenfeld 4 abgelegten Adressen B1-Bm bestimmt, die dort unter festen Anfangsadressen abgelegt sind. Die im Adressenfeld 4 abgelegten Vektoradressen B1-Bm können auch als Steuerworte bezeichnet werden, deren Wert jeweils eine Vektoradresse aus dem Vektorenfeld 5 bestimmt. Über das Vektorenfeld 5 wird dann die entsprechende Gruppe von Kennlinienstützwerten im Kennlinienfeld 6 adressiert und zum Mikroprozessor 1 zur weiteren Verarbeitung übertragen.

Bei einer Änderung der motorspezifischen Daten und Konstanten genügt es, diese Änderungen lediglich im externen Speicher 3 zu berücksichtigen. Hierzu kann es ausreichend sein, lediglich den Inhalt einer Anfangsadresse des Adressenfeldes 4 zu ändern, um dadurch beispielsweise eine vorgegebene Verknüpfungsart mit einer anderen, im Konstantenfeld 7 abgelegten Konstanten, durchführen zu können. Eine Änderung des im internen Speicher 2 enthaltenen Basisprogrammes ist dabei nicht erforderlich.

Die physikalische Lage des Kennlinienfeldes 6 und des Konstantenfeldes 7 kann sehr einfach über die zugehörigen Datenadressen und Vektoradressen im Adressenfeld 4 und im Vektorenfeld 5 geändert werden. Selbst eine Verschiebung innerhalb des Speicherraumes ist auf diese Weise sehr einfach möglich.

Soll beispielsweise statt einer Differenzbildung zwischen den Daten X und Y, die unter den Datenadressen D1 und D2 im Konstantenfeld 7 abgespeichert sind, eine Differenzbildung zwischen den Daten X und Z erfolgen, so braucht lediglich im Adressenfeld 4 anstelle der Datenadresse D2 unter der entsprechenden Anfangsadresse die Datenadresse D3 gespeichert zu werden. Sämtliche übrigen Daten sowie das im internen Speicher 2 enthaltene Basisprogramm bleiben dabei unverändert. Eine entsprechende Anpassung bezüglich der Verknüpfung von Kennlinienwerten kann gleichermassen durch eine geeignete Änderung der Datenadressierung im Vektorenfeld 5 erfolgen.

**Patentansprüche**

1. Elektronisches Steuersystem zur Steuerung von Verbrennungsmotoren, das einen Mikroprozessor mit einem internen Speicher für das Basisprogramm und einen kundenspezifisch änderbaren externen Speicher enthält, dessen Speicherinhalte vom Mikroprozessor abgefragt werden können, wobei die Speicherinhalte über Adressen vom Mikroprozessor abrufbar sind, dadurch gekennzeichnet, dass der externe Speicher (3) ein Adressen- und Datenspeicher ist, der wenigstens ein Adressenfeld (4), welches entsprechend dem Basisprogramm vom Mikroprozessor (1) angesteuert wird, ein Vektorenfeld (5) und ein Datenfeld (8) umfasst, wobei das Adressenfeld (4) Adressen enthält, die auf Vektoradressen (B1-Bm) des Vektorenfeldes (5) und/oder auf Datenadressen (C1-Cr, D1-Ds) des Datenfeldes (8) hinweisen, dass im Vektorenfeld (5) Datenadressen abgelegt sind, die auf Datenadressen (C1-Cr, D1-Ds) des Datenfeldes (8) hinweisen, und dass im Datenfeld (8) kundenspezifische Daten abgespeichert sind.

2. Steuersystem nach Anspruch 1, dadurch gekennzeichnet, dass im externen Speicher (3) das Datenfeld (8) in ein Konstantenfeld (7) zur Aufnahme kundenspezifischer Konstanten und in ein Kennlinien-Stützwerte enthaltendes Kennlinienfeld (6) unterteilt ist, wobei das Kennlinienfeld (6) über das Vektorenfeld (5) und das Konstantenfeld (7) direkt über das Adressenfeld (4) adressiert wird.

3. Steuersystem nach einem der vorhergehenden Ansprüche, dadurch gekennzeichnet, dass der externe Speicher (3) ein löschbarer, programmierbarer Speicher ist, der eine Änderung einzelner Speicherinhalte zulässt.

## Revendications

1. Système de commande électronique pour commander un moteur à combustion interne, système comportant un microprocesseur avec une mémoire interne pour le programme de base et une mémoire externe modifiable suivant le client, mémoires qui peuvent être interrogées par le microprocesseur, le contenu des mémoires pouvant être appelé par le microprocesseur par l'intermédiaire d'adresses, système caractérisé en ce que la mémoire externe (3) est une mémoire de données et d'adresses qui comprend au moins un champ d'adresses (8) commandé en fonction du programme de base du microprocesseur (1), un champ de vecteurs (5) et un champ de données (8), le champ d'adresses (4) contenant des adresses qui correspondent à des adresses de vecteurs (B1–Bm) du champ de vecteurs (5) et/ou des adresses de données (C1–Cr, D1–Ds) du champ de données (8), et des adresses de données sont inscrites dans le champ de vecteurs (5) qui correspondent aux adresses des données (C1–Cr, D1–Ds) du champ de données (8) et des données caractéristiques du client sont inscrites dans le champ de données (8).

2. Système de commande selon la revendication 1, caractérisé en ce que dans la mémoire externe (3), le champ de données (8) est subdivisé en un champ de constante (7) recevant les constantes caractéristiques du client et un champ de courbes caractéristiques (6) contenant les grandeurs d'appui des courbes caractéristiques, le champ de courbes caractéristiques (6) étant adressé par l'intermédiaire du champ de vecteurs (5) alors que le champs de constantes (7) est adressé directement par le champ des adresses (4).

3. Système de commande selon l'une des revendications précédentes, caractérisé en ce que la mémoire externe (3) est une mémoire programmable effaçable qui permet de modifier les différents contenus de la mémoire.

## Claims

1. Electronic control system for controlling combustion engines which contains a microprocessor having an internal memory for the basic program and containing an external memory which can be changed in a customer-specific manner, the memory contents of which can be interrogated by the microprocessor, it being possible for the microprocessor to call up the memory contents via addresses, characterized in that the external memory (3) is an addresses and data memory comprising at least an addresses field (4), which is addressed by the microprocessor (1) in accordance with the basic program, a vectors field (5) and a data field (8), the addresses field (4) containing addresses which indicate vector addresses (B1–Bm) of the vectors field (5) and/or data addresses (C1–Cr, D1–Ds) of the data field (8), in that in the vectors field (5) data addresses are stored which indicate data addresses (C1–Cr, D1–Ds) of the data field (8), and in that customer-specific data are stored in the data field (8).

2. Control system according to Claim 1 characterized in that, in the external memory (3), the data field (8) is subdivided into a constants field (7) for receiving customer-specific constants and into a characteristics field (6) containing characteristics interpolation nodes, the characteristics field (6) being directly addressable via the vectors field (5) and the constants field (7) being directly addressable via the addresses field (4).

3. Control system according to one of the preceding claims, characterized in that the external memory (3) is an erasable, programmable memory which permits a change of individual memory contents.

μP

ROM

1

2

DATEN-u. ADRESSBUS

M

EPROM

3

_FIG.1_

| A1 | D1 |
| A2 | B3 |
| | |
| An | |

4

3

| B1 | |
| B2 | |
| B3 | C12 |
| | |
| Bm | |

5

| C1 | |
| | DATEN |
| C12 | |
| Cr | |

6

| D1 | x |
| D2 | y |
| D3 | z |
| | DATEN |
| Ds | |

7

8

_FIG.2_